# EUROPEAN PATENT SPECIFICATION

(11) **EP 1 865 785 B1**
(45) Date of publication and mention of the grant of the patent: **10.12.2008**
(21) Application number: 06723661.2
(22) Date of filing: 20.03.2006
(51) Int. Cl.: A23B 4/22, A23L 3/3463

(54) **FOOD PRESERVATIVE SYSTEM AND METHOD FOR PRESERVING A FOOD COMPOSITION**
SYSTEM ZUR KONSERVIERUNG VON NAHRUNGSMITTELN UND VERFAHREN ZUR KONSERVIERUNG EINER NAHRUNGSMITTELZUSAMMENSETZUNG
SYSTEME DE CONSERVATEURS ALIMENTAIRES ET PROCEDE DE CONSERVATION DE PREPARATIONS ALIMENTAIRES

(30) Priority: 31.03.2005 US 96087
(43) Date of publication of application: 19.12.2007
(73) Proprietor: Unilever N.V., 3013 AL Rotterdam (NL); Unilever PLC, London Greater London EC4P 4BQ (GB)
(72) Inventor: CIRIGLIANO, Michael Charles, Englewood Cliffs New Jersey 07632 (US); AQUINO, Leonardo Jose Sanchez, Englewood Cliffs, New Jersey 07632 (US); SHERMAN, Ashley Kate, Englewood Cliffs, New Jersey07632 (US)
(74) Representative: Rosen Jacobson, Frans Lucas M.
(86) International application number: PCT/EP2006/002671
(87) International publication number: WO 2006/103018

(56) References cited:
- EP-A- 1 369 045
- US-A- 5 573 801
- US-A- 6 156 362
- US-A1- 2001 046 538
- US-A1- 2004 175 473
- DATABASE FSTA [Online] INTERNATIONAL FOOD INFORMATION SERVICE (IFIS), FRANkFURT-MAIN, DE; 1977, ZHVALEVSKII A S ET AL: "Storage of tomato pulp." XP002387347 Database accession no. 77-1-11-j1567 & KONSERVNAYA I OVOSHCHESUSHIL'NAYA PROMYSHLENNOST', 1976, KRAINSKII NAUCHNO-ISSLED. INST. KONSERVNOI PROMYSHLENNOSTI, USSR
- DATABASE FSTA [Online] INTERNATIONAL FOOD INFORMATION SERVICE (IFIS), FRANkFURT-MAIN, DE; 1972, RUDAVSKAYA A B ET AL: "Effect of sodium sorbate and nisin on keeping quality of Yantar processed cheese." XP002387348 Database accession no. 72-4-08-p1234 & TOVAROVEDENIE, vol. 5, 1971,
- DATABASE FSTA [Online] INTERNATIONAL FOOD INFORMATION SERVICE (IFIS), FRANkFURT-MAIN, DE; 1978, AZIS KHADR ET AL: "Use of preservatives in processed cheese manufacture." XP002387349 Database accession no. 78-4-10-p1762 & MOLOCHNAYA PROMYSHLENNOST', 1978, MOSKOVSKII TEKH. INST., MASLODEL'NOI I SYRODEL'NOI PROMYSHLENNOSTI, USSR
- DATABASE FSTA [Online] INTERNATIONAL FOOD INFORMATION SERVICE (IFIS), FRANkFURT-MAIN, DE; 1984, LEVON A V ET AL: "Preservation of whey." XP002387350 Database accession no. 84-1-08-p1668 & PISHCHEVAYA PROMYSHLENNOST, 1982, RESPUBLIKANSKII MEZHVEDOMSTVENNYI NAUCHNO-TEKHNICHESKII SBORNIK
- SHTENBERG AJ, IGNATEV AD: "Toxicological evaluation of some combinations of food preservatives" FD COSMET. TOXICOL., vol. 8, 1970, pages 369-380, XP002387338

## Description

### FIELD OF THE INVENTION

The present invention is directed to a food preservative system and a method for preserving a food composition with the preservative system. The preservative system of the present invention comprises a first component suitable to interfere with the permeability of the cell membrane of a spoilage organism and pathogen, and a second component suitable to diffuse into the plasma of the spoilage organism and pathogen in order to kill and/or inhibit growth of the spoilage organism, pathogen or both. The total weight of the second component in the food composition does not exceed 1.9%, and the food composition is unexpectedly microbiologically stable and safe while at the same time possessing excellent taste, olfactory, texture and visual characteristics.

### BACKGROUND OF THE INVENTION

Preservatives, like sorbate, benzoate and acids have been used in food products. Such preservatives offer a degree of microbiological inhibition. However, conventional preservative systems, in order to be effective, require the presence of high levels of acids and other microbiological inhibitors in order to ensure stability and safety. Particularly, standard preservative systems are known to dramatically alter the flavor characteristics of food compositions, rendering the same safe but unacceptable to consumers from a taste standpoint.

Salads, like chilled salads having at least 30% by weight protein, are especially difficult to make microbiologically stable and safe. This is true because such salads often have a pH above 4.5 (usually over 5.0) and contain fats, meats and/or fish as well as water and carbohydrates, thus needing a plethora of antimicrobial agents to render the same stable and safe for human consumption.

It is of increasing interest to develop a preservative system that may be used in food compositions, especially chilled food compositions that have a high protein content. This invention, therefore, is directed to a food preservative system and a method for preserving food compositions. The preservative system comprises a first component suitable to interfere with the permeability of the cell membrane of a spoilage organism and pathogen, and a second component suitable to diffuse into the plasma of the spoilage organism, pathogen or both. The total weight of the second component in the food composition does not exceed 1.9%, and the food composition is unexpectedly microbiologically stable and safe while at the same time possessing excellent taste, olfactory, texture and visual characteristics.

### ADDITIONAL INFORMATION

Efforts have been disclosed for making preservative systems. In International Publication WO 03/094638, preservative and protective systems derived from lauric acid and arginine are described.

Other efforts have been disclosed for making preservative systems. In International Publication WO 03/013454, preservative systems for cosmetic preparations are described.

Even other efforts have been disclosed for making microbiologically stable food compositions. In U.S. Patent No. 6,036,986, cinnamic acid for use in tea-containing beverages is described.

US5573801 discloses combinations of an antibiotic agent of microbial origin with an organic acid, like nisin with citric acid, but not citric + lactic. A similar disclosure has also US2004/175473. EP1369045 disclose both nisin and alimentary acids, however, the components are separate, one in the food product the other in casing.

None of the additional information above describes a preservative system and method for preserving a food composition that employ 1.9% by weight or less of a component that diffuses into the plasma of spoilage organisms and pathogens in order to kill and/or inhibit growth of the same.

### SUMMARY OF THE INVENTION

In a first aspect, the present invention is directed to a preservative composition for food compositions according to claim 1.

In a second aspect, the present invention is directed to a method of preserving a food composition with the preservative system of the first aspect of the invention.

In a third aspect, the present invention is directed to a microbiologically stable and safe food composition made via the method of the second aspect of this invention.

Food composition, as used herein, means a composition suitable for consumption by humans, including a filling, dip, sauce, spread, topping, dressing, refrigerated salad, beverage or the like, whereby the same is meant to include oil-in-water emulsions, water-in-oil emulsions, and multiple emulsions. Microbiologically stable (i.e., spoilage free) means no outgrowth of spoilage bacteria, yeast and/or mold and no flavor loss attributable to microorganism activity for at least about one (1) month, and preferably, for at least one-and-a-half (1.5) months before opening and when kept at 5°C and at a pH of less than 5.5, and preferably, less than 5.0. Microbiologically safe (for products kept at about 5°C) means preventing the outgrowth of pathogens and/or achieving and maintaining at least a 2 log die off of pathogens (like *Listeria monocytogenes*) within a fourteen (14) day period (preferably seven (7) day period) when kept at a pH of less than 5.5, and preferably, less than 5.0. Free of thermal processing means in the absence of hot filling, retorting and pasteurization steps and package filling under conventional cold fill conditions. Chelating agent, as used herein, is defined to mean a compound that binds and/or isolates another compound or element. Aromatic preservative is defined herein to mean a preservative with at least one portion that has a ring with lower pi-electron energy than the open chain of the ring. High protein content means at least 30% by weight protein.

The only limitation with respect to the first component suitable for use in this invention is that the first component interferes with (i.e., enhances/increases) the permeability of cell membranes of spoilage organisms and pathogens. Illustrative and non-limiting examples of such first components suitable for use in this invention include those generally classified as an antibiotic, chelating agent, aromatic preservative, ester, enzyme and mixtures thereof.

Illustrative examples of the types of antibiotics suitable for use in this invention include peptides produced from *Lactococcus lactis,* like natamycin, nisin and pediocin; and penicillins, like methicillin, oxacillin and nafcillin.

Illustrative examples of the types of chelating agents suitable for use in this invention include EDTA; phosphates, like sodium acid pyrophosphate, trisodium pyrophosphate, tetrasodium pyrophosphate, sodium hexametaphosphate, trisodium phosphate; lactoferrin; lactoferricin B; ovotransferrin; phytic acid; sumarin; and curcumin.

Illustrative examples of the types of aromatic preservatives suitable for use in this invention include benzoic acid, coumaric acid, salicylic acid, vanillic acid, caffeic acid, cinnamic acid, ferulic acid, and mixtures thereof.

Esters suitable for use in this invention include a C₁-C₈ parabens, C₁-C₄ phytates, as well as preservatives derived from acids and arginine, like the ethyl ester of the lauramide of arginine monohydrochloride (LAE).

Suitable enzymes which may be used as the first component in this invention include lysozyme, papain, phospholipase A, haloperoxidase, lactoperoxidase and mixtures thereof.

The preferred first component suitable for use in this invention is nisin or a nisin and enzyme comprising composition, and especially those made available under the name Nisiplin or NovaGuard™ CB1 names as made commercially available by Danisco. In another preferred embodiment, the first component is not whey or dairy-based but is sugar (e.g., dextrose) based.

Typically, the first component makes up less than about 2.5% by weight of the total weight of the food composition, and preferably, from about 0.01 to about 1.0, and most preferably, from about 0.02 to about 0.5% by weight of the total weight of the food composition.

Regarding the second component suitable for use in this invention, such a component is limited only to the extent that it enters into the plasma of spoilage organisms, pathogens or both, and interferes with the activity of the spoilage organisms and pathogens by rendering them dormant or inactive, or by killing the same. Illustrative non-limiting examples of second components suitable for use in this invention include acids like sorbic, formic, acetic, propanoic, 2-hydroxypropanoic (i.e., lactic), butyric, valeric, adipic, gluconic, malic, fumaric, citric, tartaric, ascorbic, salicyclic and carnosic acid, including mixtures thereof.

The acids suitable for use as the second component in this invention are acetic acid, lactic acid, or mixtures thereof. A mixture of lactic acid and acetic acid (often supplied as a lactate and diacetate, respectively) is used wherein the amount of lactic acid employed is from 2 to 20 times, and preferably, from about 12 to about 16 times more than the amount of acetic acid employed, including all ranges subsumed therein.

In yet another preferred embodiment, less than about 35%, and preferably less than about 25%, and most preferably, less than about 15% of the second component employed is in non-dissociated form within the plasma of the spoilage organism and/or pathogen targeted and at the biological pH of the plasma.

Desired second components suitable for use in this invention often are made commercially available by Purac under the names Purac^{®}, Puracal^{®}, Purasolv^{®}, Purasal Opti. Form PD4 and Purasal Opti. Form SD4.

When preparing the preservative composition of this invention as a premix or adding the first and second component to a food composition, the ratio of first component to second component is from 1:4 to 4:1, and preferably, from 1:2.5 to 2.5:1, and most preferably, from 0.5:1.5 to 1.5:0.5.

Again, the preservative system of this invention (or the desired components thereof) can be combined with ingredients to make a food composition or combined with a food composition having already been prepared whereby combined is meant to optionally include marinating. Surprisingly, and again, when using the preservative composition of this invention, a food composition, like a filling, dip, sauce, spread, dressing, beverage or the like, is rendered microbiologically safe and stable even when the second component in the food composition does not exceed 1.9%, and makes up from about 0.1 to about 1.65% and preferably makes up from about 0.2 to about 1.35% by weight of the food composition.

The food compositions of this invention typically have a pH below about 6, and preferably, from about 3 to 5.5, and most preferably, from about 4.25 to about 5. However, the food compositions made via the method of this invention, unexpectedly, are not sour even when the same are formulated to have a pH at about 4.25. Such food compositions can optionally comprise meat, fish (e.g., tuna) crustaceans, poultry products, bread crumbs, vegetables (including chunks and puree), protein, wheat, sweeteners (including sugar and artificial sweeteners), oil, emulsions, fruit (including chunks and puree), cheese, nuts, mixtures thereof or the like.

Illustrative and non-limiting examples of preferred food compositions prepared with the preservative composition of this invention include water-in-oil and oil-in-water based spreads and toppings, pourable dressings, fruit-based compositions, dressings like mayonnaise and mayonnaise comprising salads like coleslaw, tuna, macaroni, and chicken salad.

Also, the food compositions of this invention can optionally comprise soluble fibers, insoluble fibers, gums (like Xanthan), starches, cellulose, vitamins, buffers, antioxidants, preservatives (like sorbates and benzoates), colorants, acidulants (including inorganic acids), emulsifiers, alcohol, spices (including salt), syrups, milk, food grade dispersants or stabilizers (like propylene glycol alginate), solubilizing agents (like propylene glycol), milk powder or mixtures thereof.

The often preferred food compositions of this invention preferably comprise at least about 30% by weight meat, and most preferably, from about 45 to about 65% by weight meat and from about 0.0 to about 15% by weight solid particulate like vegetables and/or fruit.

The packaging suitable for use with the food compositions made according to this invention is often a glass jar, food grade sachet, a plastic tub or squeezable plastic bottle. Sachets are preferred for food service applications, a tub is preferred for spreads and protein based salads, and a squeezable plastic bottle is often preferred for non-spreads and domestic use.

The following examples are provided to illustrate an understanding of the present invention.

### Example 1:

Chicken salad having the preservative system of this invention was made by adding the following ingredients:

| Ingredient | Percent |
|---|---|
| Water | Balance |
| Vegetables | 20.500 |
| Hellmann's Real Mayonnaise | 23.500 |
| Spices | 2.42 |
| Potassium sorbate | 0.100 |
| Sodium benzoate | 0.100 |
| Gums | 0.200 |
| Nisin containing Preservative* | 1.000 |
| Phosphoric Acid (85%) | 0.786 |
| Bread crumbs | 3.000 |
| Diced Chicken** | 48.000 |

| | |
|---|---|
| * The Nisin containing preservative employed in this example was Novagard CB1. ** The Chicken used in the salad was cooked and marinated in Purasal Opti Form PD4 to a level where the final salad had a pH of about 4.8, and contained 0.15% added acetic acid and 0.84% lactic acid supplied as an acetate and lactate, respectively. | |

Surprisingly, and with only 0.99% by weight of second component (as defined herein) the chicken salad made according to this invention displayed a 2 log reduction in *Listeria* counts in less than 10 days and no spoilage bacteria growth after about 42 days at 5°C. The chicken salad, after confirmation by panelists, was fresh tasting, and had excellent taste, olfactory, texture and visual characteristics, even after 30 days.

### Example 2:

Tuna Salad having the preservative system of this invention was made by adding the following ingredients.

| Ingredient | Percent by weight |
|---|---|
| Water | balance |
| Vegetables | 22.00 |
| Spices | 2.24 |
| Gums | 0.100 |
| Bread crumbs | 4.800 |
| Purasal Opti.Form SD-4 | 0.500 |
| Nisin comprising Preservative* | 1.000 |
| Sodium Benzoate | 0.100 |
| Potassium sorbate | 0.100 |
| Phosphoric Acid 85% | 0.380 |
| Hellmann's Real Mayonnaise | 27.500 |
| Tuna, Yellow Fin | 40.460 |

| | |
|---|---|
| *Supplied as Novagard CB1 | |

The resulting tuna salad had a pH of about 4.8, and the same also contained 0.11% added acetic acid and 0.28% lactate supplied as acetate and lactate, respectively.

Surprisingly, and with only about 0.39% by weight of second component (as defined herein), the tuna salad made according to this invention displayed a 2 log reduction in *Listeria* counts in less than 10 days and no spoilage bacteria growth after about 35 days at 5°C. The tuna salad, after confirmation by panelists, was fresh tasting, and had excellent taste, olfactory, texture and visual characteristics, even after 30 days.

## Claims

1. A preservative composition for a food composition comprising:
(a) less than 2.5% by weight of the food composition of a first component suitable to interfere with the permeability of a cell membrane of a spoilage organism and a pathogen;
wherein the first component is nisin, lysozyme or a mixture thereof; and
(b) from 0.1 to 1.65% by weight of the food composition of a second component suitable to diffuse into the plasma of the spoilage organism and pathogen in order to kill and/or inhibit growth of the spoilage organism, pathogen or both,
wherein the second component is a mixture of acetic acid and lactic acid whereby 2 to 20 times more lactic acid is present than acetic acid; and wherein the first component and second component are present at a ratio from 1:4 to 4:1.

2. The preservative composition according to claim 1 wherein the second component further comprises sorbic, formic, propanoic, butyric, valeric, adipic, gluconic, malic, fumaric, citric, tartaric, ascorbic, salicylcic, or carnosic acid or a mixture thereof.

3. A method for making a food composition microbiologically safe and stable comprising the steps of:
(a) contacting a food composition or ingredients of a food composition with preservative comprising:
(i) Less than 2.5% by weight of the food composition of a first component suitable to interfere with the permeability of a cell membrane of a spoilage organism and a pathogen; wherein the first component is nisin, lysozyme or a mixture thereof; and
(ii) from 0.1 to 1.65% by weight of the food composition of a second component suitable to diffuse into the plasma of the second component suitable to diffuse into the plasma of the spoilage organism and pathogen in order to kill and/or inhibit growth of the spoilage organism, pathogen, or both
(b) recovering the food composition
wherein the second component is a mixture of acetic acid and lactic acid whereby 2 to 20 times more lactic acid is present than acetic acid, and wherein the first component and second component are present at a ratio from 1:4 to 4:1.

4. The method according to claim 3 wherein the second component further comprises sorbic, formic, propanoic, butyric, valeric, adipic, gluconic, malic, fumaric, citric, tartaric, ascorbic, salicylic, or carnosic acid or a mixture thereof.

5. A food composition obtainable by the method according to claim 3 or claim 4.

6. The food composition, according to claim 5 wherein the food composition is a dip, filling, sauce, spread, topping, dressing, refrigerated salad or beverage.

7. The food composition according to claim 5 or 6 wherein the first component makes up from 0.01 to 1.0% by weight of the food composition.

8. The food composition according to anyone of claims 5 to 7 wherein less than 35% of the second component is in non-dissociated form within the plasma of the spoilage organism and/or pathogens.

## Patentansprüche

1. Konservierende Zusammensetzung für eine Nahrungsmittelzusammensetzung, umfassend:
(a) weniger als 2,5 Gewichts-%, bezogen auf die Nahrungsmittelzusammensetzung, einer ersten Komponente, die geeignet ist, die Permeabilität einer Zellmembran eines Verderbnis-Organismus und eines Pathogens zu stören, wobei die erste Komponente Nisin, Lysozym oder ein Gemisch davon ist; und
(b) 0,1 bis 1,65 Gewichts-%, bezogen auf die Nahrungsmittelzusammensetzung, einer zweiten Komponente, die geeignet ist, in das Plasma des Verderbnis-Organismus und des Pathogens zu diffundieren, um diesen/dieses abzutöten und/oder das Wachstum des Verderbnis-Organismus, des Pathogens oder von beiden zu inhibieren,
wobei die zweite Komponente ein Gemisch aus Essigsäure und Milchsäure ist, wobei 2- bis 20-mal mehr Milchsäure als Essigsäure vorliegt und wobei die erste Komponente und die zweite Komponente in einem Verhältnis von 1:4 bis 4:1 vorliegen.

2. Konservierende Zusammensetzung nach Anspruch 1, wobei die zweite Komponente außerdem Sorbinsäure, Ameisensäure, Propansäure, Buttersäure, Valeriansäure, Adipinsäure, Gluconsäure, Äpfelsäure, Fumarsäure, Citronensäure, Weinsäure, Ascorbinsäure, Salicylsäure oder Carnosinsäure oder ein Gemisch davon umfasst.

3. Verfahren zur Herstellung einer Nahrungsmittelzusammensetzung, die mikrobiologisch sicher und stabil ist, umfassend die Schritte:
(a) In-Kontakt-Bringen einer Nahrungsmittelzusammensetzung oder von Ingredientien einer Nahrungsmittelzusammensetzung mit einem Konservierungsmittel, umfassend:
(i) weniger als 2,5 Gewichts-%, bezogen auf die Nahrungsmittelzusammensetzung, einer ersten Komponente, die geeignet ist, die Permeabilität einer Zellmembran eines Verderbnis-Organismus und eines Pathogens zu stören, wobei die erste Komponente Nisin, Lysozym oder ein Gemisch davon ist; und
(ii) 0,1 bis 1,65 Gewichts-%, bezogen auf die Nahrungsmittelzusammensetzung, einer zweiten Komponente, die geeignet ist, in das Plasma des Verderbnis-Organismus und des Pathogens zu diffundieren, um diesen/dieses abzutöten und/oder das Wachstum des Verderbnis-Organismus, des Pathogens oder von beiden zu inhibieren,
(b) Gewinnen der Nahrungsmittelzusammensetzung,
wobei die zweite Komponente ein Gemisch aus Essigsäure und Milchsäure ist, wobei 2- bis 20-mal mehr Milchsäure als Essigsäure vorliegt und wobei die erste Komponente und die zweite Komponente in einem Verhältnis von 1:4 bis 4:1 vorliegen.

4. Verfahren nach Anspruch 3, wobei die zweite Komponente außerdem Sorbinsäure, Ameisensäure, Propansäure, Buttersäure, Valeriansäure, Adipinsäure, Gluconsäure, Äpfelsäure, Fumarsäure, Citronensäure, Weinsäure, Ascorbinsäure, Salicylsäure oder Carnosinsäure oder ein Gemisch davon umfasst.

5. Nahrungsmittelzusammensetzung, erhältlich durch das Verfahren nach Anspruch 3 oder Anspruch 4.

6. Nahrungsmittelzusammensetzung nach Anspruch 5, wobei die Nahrungsmittelzusammensetzung ein Dip, eine Füllung, eine Soße, ein Aufstrich, ein Überzug, ein Dressing, ein gekühlter Salat oder ein Getränk ist.

7. Nahrungsmittelzusammensetzung nach Anspruch 5 oder 6, wobei die erste Komponente 0,01 bis 1,0 Gewichts-% der Nahrungsmittelzusammensetzung ausmacht.

8. Nahrungsmittelzusammensetzung nach einem der Ansprüche 5 bis 7, wobei weniger als 35 % der zweiten Komponente in nicht-dissoziierter Form im Plasma des Verderbnis-Organismus und/oder der Pathogene ist.

## Revendications

1. Composition de conservateur pour une composition alimentaire comprenant :
(a) moins de 2,5 % en poids de la composition alimentaire d'un premier composant approprié pour interférer avec la perméabilité d'une membrane cellulaire d'un organisme d'altération et d'un agent pathogène ; dans laquelle le premier composant est la nisine, un lysozyme ou un mélange de ceux-ci,
(b) de 0,1 à 1,65 % en poids de la composition alimentaire d'un second composant approprié pour se diffuser dans le plasma de l'organisme d'altération et de l'agent pathogène afin de détruire et/ou inhiber la croissance de l'organisme d'altération, de l'agent pathogène ou des deux,
dans laquelle le second composant est un mélange d'acide acétique et l'acide lactique, pour lequel il y a 2 à 20 fois plus d'acide lactique que d'acide acétique ; et dans laquelle le premier composant et le second composant sont présents en un rapport de 1:4 à 4:1.

2. Composition de conservateur selon la revendication 1, dans laquelle le second composant comprend en outre l'acide sorbique, formique, propanoïque, butyrique, valérique, adipique, gluconique, malique, fumarique, citrique, tartrique, ascorbique, salicylique ou carnosique ou un mélange de ceux-ci.

3. Méthode de fabrication d'une composition alimentaire sûre et stable d'un point de vue micro-biologique, comprenant les étapes consistant à
(a) mettre en contact une composition alimentaire ou des ingrédients d'une composition alimentaire avec le conservateur, comprenant :
(i) moins de 2,5 % en poids de la composition alimentaire d'un premier composant approprié pour interférer avec la perméabilité d'une membrane cellulaire d'un organisme d'altération ou un agent pathogène, dans laquelle le premier composant est la nisine, un lysozyme ou un mélange de ceux-ci, et
(ii) de 0,1 à 1,65 % en poids de la composition alimentaire d'un second composant approprié pour se diffuser dans le plasma de l'organisme d'altération et de l'agent pathogène afin de détruire et/ou d'inhiber la croissance de l'organisme d'altération, de l'agent pathogène ou des deux,
(b) récupérer la composition alimentaire,
dans laquelle le second composant est un mélange d'acide acétique et l'acide lactique dans lequel il y a 2 à 20 fois plus d'acide lactique que d'acide acétique ; et dans laquelle le premier composant et le second composant sont présents en un rapport de 1:4 à 4:1.

4. Méthode selon la revendication 3, dans laquelle le second composant comprend en outre l'acide sorbique, formique, propanoique, butyrique, valérique, adipique, gluconique, malique, fumarique, citrique, tartrique, ascorbique, salicylique ou carnosique ou un mélange de ceux-ci.

5. Composition alimentaire susceptible d'être obtenue par la méthode selon la revendication 3 ou la revendication 4.

6. Composition alimentaire selon la revendication 5, dans laquelle la composition alimentaire est une sauce dans laquelle on trempe les aliments, une farce, une sauce, une pâte à étaler, une garniture, une sauce pour salade, une salade réfrigérée ou une boisson.

7. Composition alimentaire selon la revendication 5 ou 6, dans laquelle le premier composant constitue de 0,01 à 1,0 % en poids de la composition alimentaire.

8. Composition alimentaire selon l'une quelconque des revendications 5 à 7, dans laquelle moins de 35 % du second composant se présente sous une forme non dissociée dans le plasma de l'organisme d'altération et/ou des agents pathogènes .
